(19) Europäisches Patentamt
European Patent Office
Office européen des brevets

(11) **EP 3 918 780 B1**

(12) **EUROPÄISCHE PATENTSCHRIFT**

(45) Veröffentlichungstag und Bekanntmachung des Hinweises auf die Patenterteilung:
**17.12.2025   Patentblatt 2025/51**

(21) Anmeldenummer: **19801531.5**

(22) Anmeldetag: **07.11.2019**

(51) Internationale Patentklassifikation (IPC):
*H04N 1/60* (2006.01)     *B41J 2/21* (2006.01)

(52) Gemeinsame Patentklassifikation (CPC):
**H04N 1/6033; B41J 2/2146**

(86) Internationale Anmeldenummer:
**PCT/EP2019/080551**

(87) Internationale Veröffentlichungsnummer:
**WO 2020/094791 (14.05.2020 Gazette 2020/20)**

(54) **DIGITALDRUCKKOPF**

DIGITAL PRINTING HEAD

TÊTE D'IMPRESSION NUMÉRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.11.2018   DE 102018219138**

(43) Veröffentlichungstag der Anmeldung:
**08.12.2021   Patentblatt 2021/49**

(73) Patentinhaber: **Windmöller & Hölscher KG
49525 Lengerich (DE)**

(72) Erfinder:
• **LUXEM, Ralf
49525 Lengerich (DE)**

• **MICHAEL, Sven
49525 Lengerich (DE)**
• **LEPPING, Danjo
49525 Lengerich (DE)**
• **CORDROCH, Wolfgang
49525 Lengerich (DE)**
• **VOELSCHOW, Jens
49525 Lengerich (DE)**

(74) Vertreter: **Schneider, Bernd
Windmöller & Hölscher KG
Münsterstraße 50
49525 Lengerich (DE)**

(56) Entgegenhaltungen:
**EP-A2- 1 215 887       DE-A1- 19 922 718
US-A1- 2012 008 170    US-A1- 2014 204 137**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen Digitaldruckkopf einer Digitaldruckmaschine zum Bedrucken eines Bedruckstoffs mit einem Druckbild.

Der Fortdruck (Auflagendruck) unterliegt bekannterweise durch äußere Einflüsse (Temperatur, Luftfeuchtigkeit usw.) einer sichtbaren Schwankung des Farbauftrages. In analogen (konventionellen) Drucksystemen wird dies durch den Einsatz von Mess- und Regeltechnik (manuell oder automatisiert) kompensiert.

Hierbei wird entweder die Farbdichte oder in moderneren Systemen auch der Farbort (L a b) und die Tonwertzunahme (TWZ) über Kontrollkeile eingemessen. Es werden dann in der Regel nur die einzelnen Farbkanäle unabhängig betrachtet und korrigiert. Die Korrektur erfolgt über die Änderung des Farbauftrages (Dichte) oder der Farbverteilung (TWZ) in den einzelnen Farbwerken.

Die Messungen beziehen sich auf die chromatischen Farben Cyan, Magenta und Gelb, dem achromatischen Schwarz sowie Sonderfarben (Pantone, HKS, usw.). Hinzu kommen neuerdings auch die chroma-erweiterten Farben Rot (Orange), Grün und Blau (Violet).

Als Anhaltspunkt werden oft auch definierte Graukeile mitgedruckt, um hier entweder visuell oder auch messtechnisch Korrekturschwankungen zu erkennen. Dies ist innerhalb des 4c-Drucks ein noch relativ einfach zu regulierender Prozess. Ein grundlegendes Problem ist die eventuell daraus resultierende Farbabweichung der Sekundär-, Tertiär- und Quartärfarben im erweiterten Farbraum, da die oben genannte Korrektur in der Regel nur die chromatischen Primärfarben und Schwarz betrifft. Eine Korrektur von z. B. einem Farbton Magenta kann nicht mehr unbedingt die Auswirkungen berücksichtigen, die dieser Vorgang auf die chroma-erweiterte Farbe Rot hat.

Aus der EP 1 215 887 A2 ist eine Prüfkopfvorrichtung zur Erzeugung eines Prüfdrucks bekannt. Die Prüfkopfanordnung umfasst einen Farblichtanalysator und einen Farbdruckkopf. Es ist bekannt, dass eine Steuereinheit mittels einer Steuereinheit der Farblichtanalysator angesteuert wird, um Farbmessungen eines Bildes vorzunehmen. Des Weiteren ist die Steuereinheit derart ausgebildet, dass die vom Druckkopf gedruckten Farben auf der Grundlage eines Testbildes einstellbar bzw. korrigierbar sind.

Aufgabe der Erfindung ist es daher, die Qualität des durch einen Digitaldruckkopf gedruckten Druckbilds zu verbessern.

Diese Aufgabe wird durch einen Digitaldruckkopf gemäß dem Anspruch 1 und ein Verfahren zum Ansteuern eines Digitaldruckkopfes gemäß Anspruch 7 gelöst. Weitere bevorzugte Ausführungsformen ergeben sich aus den Unteransprüchen 2 - 7 und 9 - 14.

Die Erfindung basiert auf der Erkenntnis, an mehreren zu definierenden Messpunkten (Kontrollkeil oder motivabhängige Punkte) die Farborte und den TWZ zu messen und in annähernder Echtzeit (z. B. < 1 Minute) die zu druckenden Daten zu korrigieren. Dabei ist es zum Beispiel möglich, eine Änderung der Farbe Magenta, die eventuell einen Einfluss auf die Farbe Rot hat, auch mit Bezug auf die Farbe Rot zu korrigieren. Dies erfolgt erfindungsgemäß in einer Regelschleife mit Korrektur der Steuerinformationen in der Steuereinheit, in den Rasterdaten durch Bildmanipulation oder in vorseparierten Contonedaten durch Gradationskurven. Dazu müssen entsprechende Farbraumdefinitionen (ICC-Profile) der Druckmaschine (in Bezug auf den Bedruckstoff, erfindungsgemäß die Materialbahn) vorhanden sein. Zudem sollten auch entsprechende Toleranzen (ΔE), ab wann überhaupt korrigiert werden soll, definiert sein. Dies ist ebenfalls abhängig von der Wahl des Bedruckstoffes, der Qualitätsanforderung und der Messtechnik.

Bevor die bevorzugten Ausführungsformen aufgeführt werden, werden zunächst noch einige Fachbegriffe erläutert:

Tonwertzunahme

Der Fachbegriff Tonwertzunahme (Abk.: TWZ) bezeichnet den Effekt, dass Rasterpunkte der Druckvorlage (z. B. einer digitalen Bilddatei oder einem Film) auf dem bedruckten Bogen verfahrensbedingt größer erscheinen, das Druckbild also dunkler wird als in der Vorlage vorgesehen. Genauer betrachtet, werden Rasterpunkte bei jeder technischen Übertragung nie ganz gleich übertragen, sondern in irgendeiner verfahrenstypischen Weise deformiert. Dabei treten Verformungen, Vergrößerungen, aber auch Verkleinerungen auf.

Spektralsensor und Spektralwertfunktion

Jeder Mensch verfügt in der Netzhaut über drei Zapfenarten, die sich in ihrer spektralen Empfindlichkeit unterscheiden. Um die individuellen Unterschiede im menschlichen Farbempfinden auszugleichen, wurde ein "Normalbetrachter" in diversen Normen verbindlich festgelegt (insbesondere ISO 12647 und DIN 5033). Die Normalfarbwerte errechnen sich aus dem Spektrum des empfangenen Lichts, dem spektralen Reflexionsgrad der Farbe sowie den genormten Spektralwertfunktionen des Normalbetrachters. Mit den derart berechneten Normalfarbwerten lässt sich dann die mit einem Spektralsensor gemessen Farbe exakt beschreiben.

Lab-Farbmodell

Das Lab-Farbmodell beschreibt einen dreidimensionalen Farbraum, in dem entsprechende Farbunterschiede, die vom Menschen als gleich groß empfunden werden, auch jeweils messbar gleich große Abstände haben. Das Bedeutende an diesem Farbraum ist somit die Geräteunabhängigkeit und daraus resultierende Objektivität. Der Lab-Farbraum wird als Kugel mit drei Achsen dargestellt. Diese Achsen sind wie folgt definiert:

    L = Helligkeitsachse
    a = Rot-Grün-Achse
    b = Blau-Gelb-Achse

Der L-Wert bewegt sich immer zwischen 0 und 100. Dabei steht 0 für absolut schwarz und 100 für absolut weiß. Zur Gewährleistung einer eindeutigen Farbempfindung wurden ein Normalbetrachter und die Normallichtart definiert. Für die Prozessfarben Cyan, Magenta, Gelb und Schwarz sind die Farborte im Übrigen in der Norm ISO 2846 festgelegt.

Der Unterschied zwischen zwei Farborten wird durch den Farbabstand ΔE ausgedrückt. Die Berechnung des Farbabstandes erfolgt nach der folgenden Formel:

$$\Delta E \ = \ \sqrt{\Delta L^2 \ + \ \Delta a^2 \ + \ \Delta b^2}$$

Die Werte ΔL, Δa und Δb sind jeweils die Differenzen zwischen den Komponenten der beiden Farborte.

Erfindungsgemäß ist der Bedruckstoff eine Materialbahn.

Nach weiterer einer bevorzugten Ausführungsform ist die Tintentransfer-Einheit eine Inkjet-Einheit. Andere denkbare Prinzipien sind die Elektrofotografie oder der indirekte Druck über ein Transfermedium.

Nach weiterer einer bevorzugten Ausführungsform ist die Farbmesseinheit ein Spektralsensor zur Farbortmessung bei voller Druckgeschwindigkeit.

Nach weiterer einer bevorzugten Ausführungsform ist die Regeleinheit dazu ausgelegt, die von der Steuereinheit übertragenen Steuerinformationen zu korrigieren.

Nach weiterer einer bevorzugten Ausführungsform ist die Regeleinheit dazu ausgelegt, die Soll-Rasterpunkte im digitalen Bildspeicher zu korrigieren.

Nach weiterer einer bevorzugten Ausführungsform ist die Regeleinheit dazu ausgelegt, die Soll-Farbinformationen im digitalen Bildspeicher zu korrigieren.

Weitere Einzelheiten und Vorteile der Erfindung werden anhand der beigefügten Zeichnung beschrieben. In dieser zeigt:

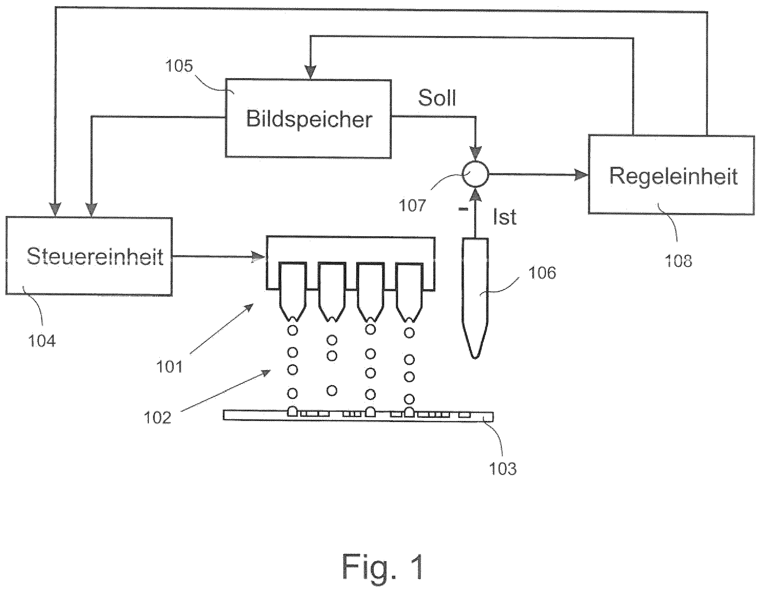

Fig. 1    ein Blockschaltbild des digitalen Druckkopfes.

Fig. 1 zeigt ein Blockschaltbild des digitalen Druckkopfes. Kern des Druckkopfes ist die Tintentransfer-Einheit 101, die in diesem Fall mehrere Inkjet-Düsen umfasst, mit denen aus der Drucktinte einzelne Tintentröpfchen 102 erzeugt und auf den Bedruckstoff 103, erfindungsgemäß die Materialbahn, übertragen werden.

Die für das Betreiben der Tintentransfer-Einheit 101 benötigten Steuerinformationen werden von der Steuereinheit 104 berechnet und an die Tintentransfer-Einheit 101 übertragen. Die Steuereinheit 104 bezieht ihre Informationen über das zu druckende Bild wiederum aus dem Bildspeicher 105, wobei im Bildspeicher 105 das Druckbild in Form von digitalen Soll-Rasterpunkten und digitalen Soll-Farbinformationen abgespeichert ist. Das gerasterte Druckbild wurde dabei vor dem Beginn des Druckjobs aus einem üblichen digitalen Bildformat (z. B. RGB 24 bit, TIFF oder PDF) im Rahmen des sogenannten Raster Image Prozesses (Abk.: RIP) erzeugt.

Über dem vollständig gedruckten Druckbild ist eine Farbmesseinheit 106 angeordnet, die aus einem Spektralsensor besteht. Die Farbmesseinheit 106 misst die Ist-Farbinformationen an vorab definierten Mess-Stellen (geeignete Stellen im Bild oder gesonderte Farbkeile am Rande des Bildes) und leitet die Ist-Farbinformation an die Vergleichseinheit 107 weiter.

In der Vergleichseinheit 107 wird dann die Ist-Farbinformation mit der entsprechenden Soll-Farbinformation verglichen und daraus die Delta-Farbinformation (ΔE) gebildet. Das ΔE wird der Regeleinheit 108 zugeführt, die die Steuerinformationen der Steuereinheit 104 derart korrigiert, dass sich das ΔE verringert. Dies erfolgt erfindungsgemäß in einer Regelschleife mit Korrektur der Steuerinformationen in der Steuereinheit, in den Rasterdaten durch Bildmanipulation oder in vorseparierten Contonedaten durch Gradationskurven.

Im Folgenden werden zwei Beispiele mit Zahlenwerten aufgeführt:

Beispiel 1

| Hautton | Cyan | Magenta | Yellow | Black | Orange | Green | Violet |
|---------|------|---------|--------|-------|--------|-------|--------|
| Lab | 84/12/22 | | | | | | |
| 7c | 6,3 | 22,4 | 32,2 | 0 | 9,8 | 0 | 0 |
| | | | | | | | |
| Messung | | | | | | | |
| Lab | 80/12/22 | | | | | | |
| 7c | 12,2 | 28,6 | 37,6 | 0 | 9,8 | 0 | 0 |
| | | | | | | | |
| Delta | +5,9 | +6,2 | +5,4 | 0 | 0 | 0 | 0 |

Am Beispiel 1 ist zu erkennen, dass eine gemessene Veränderung der Helligkeit L von 84 zu 80 ($\Delta E$ von 4) in diesem Falle nur Auswirkungen auf die chromatischen Farben Cyan, Magenta, und Yellow hat. Durch eine entsprechende Korrektur in den vorseparierten Contonedaten durch Anpassung der Gradationskurven im Cyan-, Magenta- und Yellow-Kanal kann eine Korrektur erreicht werden. Anschließend werden nur die Farbauszüge neu gerastert, die sich auch verändert haben. In diesem Beispiel Cyan, Magenta und Yellow.

Beispiel 2

| Grauton | Cyan | Magenta | Yellow | Black | Orange | Green | Violet |
|---------|------|---------|--------|-------|--------|-------|--------|
| Lab | 37/3/3 | | | | | | |
| 7c | 46,3 | 47,5 | 46,3 | 46,3 | 4,3 | 0 | 0 |
| | | | | | | | |
| Messung | | | | | | | |
| Lab | 30/3/3 | | | | | | |
| 7c | 47,8 | 47,8 | 47,8 | 57,6 | 4,7 | 0,8 | 0 |
| | | | | | | | |
| Delta | 1,5 | 0,3 | 1,5 | 11,3 | 0,4 | 0,8 | 0 |

Am Beispiel 2 hat sich die Helligkeit L von 37 auf 30 ($\Delta E$ von 7) verdunkelt, was zur Folge hat, das sich 6 Farben im 7c-Farbraum verändert haben. Bei einer Qualitätsanforderung von z. B. $\Delta E$ kleiner 2,5 ist es ausreichend, eine Anpassung der Gradationskurve für den Farbton Black durchzuführen. Damit keine Änderungen der Gradationskurven zu fehlerhaften Korrekturen anderer Farborte werden, muss eine Mindestanzahl an zu überwachenden Motivfarben gleichzeitig betrachtet und entsprechend auch immer gleichzeitig beurteilt und korrigiert werden.

**Patentansprüche**

1. Digitaldruckkopf einer Digitaldruckmaschine zum Bedrucken einer Materialbahn mit einem Druckbild,

mit einer Tintentransfer-Einheit (101) zum Übertragen von Drucktinte auf die Materialbahn in Form von Ist-Rasterpunkten,
mit einem digitalen Bildspeicher (105), in dem das Druckbild in Form von digitalen Soll-Rasterpunkten und digitalen Soll-Farbinformationen abgespeichert ist,

mit einer Steuereinheit (104) zum Berechnen und Übertragen von Steuerinformationen an die der Tintentransfer-Einheit in Abhängigkeit von den Soll-Rasterpunkten aus dem digitalen Bildspeicher (105),

mit einer Farbmesseinheit (106) zum Messen einer Ist-Farbinformation aus dem Druckbild,

mit einer Vergleichseinheit (107) zum Vergleichen der Ist-Farbinformation mit der entsprechenden Soll-Farbinformation zum Berechnen einer Delta-Farbinformation (ΔE), und

mit einer Regeleinheit (108) zum Korrigieren der Steuerinformationen in Abhängigkeit von der Delta-Farbinformation (ΔE) derart, dass die Abweichung der Ist-Farbinformation von der Soll-Farbinformation verringert wird,

wobei in einer Regelschleife die Korrektur der Steuerinformationen in der Steuereinheit (104), in den Rasterdaten durch Bildmanipulation oder in vorseparierten Contonedaten durch Gradationskurven erfolgen kann.

2. Digitaldruckkopf nach Anspruch 1, wobei die Tintentransfer-Einheit eine Inkjet-Einheit ist.

3. Digitaldruckkopf nach einem der Ansprüche 1 - 2, wobei die Farbmesseinheit (106) ein Spektralsensor zur Farbortmessung bei voller Druckgeschwindigkeit ist.

4. Digitaldruckkopf nach einem der Ansprüche 1 - 3, wobei die Regeleinheit (108) dazu ausgelegt ist, die von der Steuereinheit (104) übertragenen Steuerinformationen zu korrigieren.

5. Digitaldruckkopf nach einem der Ansprüche 1 - 4, wobei die Regeleinheit (108) dazu ausgelegt ist, die Soll-Rasterpunkte im digitalen Bildspeicher (105) zu korrigieren.

6. Digitaldruckkopf nach einem der Ansprüche 1 - 5, wobei die Regeleinheit (108) dazu ausgelegt ist, die Soll-Farbinformationen im digitalen Bildspeicher (105) zu korrigieren.

7. Verfahren zum Ansteuern eines Digitaldruckkopfes einer Digitaldruckmaschine, um eine Materialbahn mit einem Druckbild zu bedrucken,

bei dem mit einer Tintentransfer-Einheit (101) Drucktinte auf die Materialbahn in Form von Ist-Rasterpunkten übertragen wird,

bei dem in einem digitalen Bildspeicher (105) das Druckbild in Form von digitalen Soll-Rasterpunkten und digitalen Soll-Farbinformationen abgespeichert wird,

bei dem mit einer Steuereinheit (104) Steuerinformationen an die der Tintentransfer-Einheit (101) in Abhängigkeit von den Soll-Rasterpunkten aus dem digitalen Bildspeicher (105) berechnet und übertragen werden,

bei dem mit einer Farbmesseinheit (106) Ist-Farbinformation aus dem Druckbild gemessen werden,

bei dem mit einer Vergleichseinheit (107) die Ist-Farbinformation mit der entsprechenden Soll-Farbinformation verglichen wird, eine Delta-Farbinformation (ΔE) zu berechnen, und

bei dem mit einer Regeleinheit (108) die Steuerinformationen in Abhängigkeit von der Delta-Farbinformation (ΔE) derart korrigiert wird, dass die Abweichung der Ist-Farbinformation von der Soll-Farbinformation verringert wird, wobei

in einer Regelschleife die Korrektur der Steuerinformationen in der Steuereinheit (104), in den Rasterdaten durch Bildmanipulation oder in vorseparierten Contonedaten durch Gradationskurven erfolgt.

8. Verfahren nach Anspruch 7, wobei die Tintentransfer-Einheit (101) eine Inkjet-Einheit ist.

9. Verfahren nach einem der Ansprüche 7 - 8, wobei die Farbmesseinheit (106) ein Spektralsensor zur Farbortmessung bei voller Druckgeschwindigkeit ist.

10. Verfahren nach einem der Ansprüche 7 - 9, wobei die Regeleinheit (108) dazu ausgelegt ist, die von der Steuereinheit übertragenen Steuerinformationen zu korrigieren.

11. Verfahren nach einem der Ansprüche 7 - 10, wobei die Regeleinheit (108) dazu ausgelegt ist, die Soll-Rasterpunkte im digitalen Bildspeicher (105) zu korrigieren.

12. Verfahren nach einem der Ansprüche 7 - 11, wobei die Regeleinheit (108) dazu ausgelegt ist, die Soll-Farbinformationen im digitalen Bildspeicher (105) zu korrigieren.

**EP 3 918 780 B1**

**Claims**

1. Digital printing head of a digital printing machine for printing a print image onto a material web,

with an ink transfer unit (101) for transferring printing ink onto the material web in the form of actual raster dots,
with a digital image memory (105), in which the print image is stored in the form of digital target raster dots and digital target color information,
with a controller (104) for calculating and transferring control information to the ink transfer unit as a function of the target raster dots from the digital image memory (105),
with a color measuring unit (106) for measuring actual color information from the print image,
with a comparison unit (107) for comparing the actual color information with the corresponding target color information for calculating delta color information ($\Delta E$), and
with a control unit (108) for correcting the control information as a function of the delta color information ($\Delta E$) such that the deviation of the actual color information from the target color information is reduced,
wherein in a control loop the correction of the control information in the controller (104), in the raster data can be carried out by image manipulation or in preseparated contone data by gradation curves.

2. Digital printing head according to claim 1, wherein the ink transfer unit is an inkjet unit.

3. Digital printing head according to any one of claims 1 - 2, wherein the color measuring unit (106) is a spectral sensor for color location measurement at full printing speed.

4. Digital printing head according to any one of claims 1 - 3, wherein the control unit (108) is configured to correct the control information transmitted by the controller (104).

5. Digital printing head according to any one of claims 1 - 4, wherein the control unit (108) is configured to correct the target raster dots in the digital image memory (105).

6. Digital printing head according to any one of claims 1 - 5, wherein the control unit (108) is configured to correct the target color information in the digital image memory (105).

7. Method for controlling a digital printing head of a digital printing machine, in order to print a print image onto a material web,

in which printing ink is transferred onto the material web in the form of actual raster dots by means of an ink transfer unit (101),
in which the print image is stored in a digital image memory (105) in the form of digital target raster dots and digital target color information,
in which a controller (104) calculates and transmits control information to the ink transfer unit (101) as a function of the target raster dots from the digital image memory (105),
in which a color measuring unit (106) measures the actual color information from the print image,
in which a comparison unit (107) compares the actual color information with the corresponding target color information to calculate delta color information ($\Delta E$), and
in which a control unit (108) corrects the control information as a function of delta color information ($\Delta E$) such that the deviation of the actual color information from the target color information is reduced, wherein
in a control loop, the control information is corrected in the controller (104), in the raster data by image manipulation or in preseparated contone data by gradation curves.

8. Method according to claim 7, wherein the ink transfer unit (101) is an inkjet unit.

9. Method according to any one of claims 7-8, wherein the color measuring unit (106) is a spectral sensor for color location measurement at full printing speed.

10. Method according to any one of claims 7-9, wherein the control unit (108) is configured to correct the control information transmitted by the controller.

11. Method according to any one of claims 7-10, wherein the control unit (108) is configured to correct the target raster dots in the digital image memory (105).

**12.** Method according to any one of claims 7-11, wherein the control unit (108) is configured to correct the target color information in the digital image memory (105).

**Revendications**

**1.** Tête d'impression numérique d'une machine d'impression numérique pour imprimer une image d'impression sur une bande de matériau,

avec une unité de transfert d'encre (101) pour transmettre de l'encre d'impression sur la bande de matériau sous forme de points de trame réels,
avec une mémoire d'image numérique (105) dans laquelle l'image d'impression est enregistrée sous forme de points de trame de consigne numériques et d'informations de couleur de consigne numériques,
avec un dispositif de commande (104) pour calculer et transmettre des informations de commande à l'unité de transfert d'encre en fonction des points de trame de consigne à partir de la mémoire d'image numérique (105),
avec une unité de mesure de couleur (106) pour mesurer une information de couleur réelle à partir de l'image d'impression,
avec une unité de comparaison (107) pour comparer l'information de couleur réelle à l'information de couleur de consigne correspondante pour calculer une information de couleur delta ($\Delta E$), et
avec une unité de régulation (108) pour corriger les informations de commande en fonction de l'information de couleur delta ($\Delta E$) de sorte que l'écart entre l'information de couleur réelle et l'information de couleur de consigne est réduit,
dans laquelle la correction des informations de commande peut être effectuée dans une boucle de régulation dans le dispositif de commande (104), dans les données de trame par manipulation d'image ou dans des données à ton continu préséparées par des courbes de gradation.

**2.** Tête d'impression numérique selon la revendication 1, dans laquelle l'unité de transfert d'encre est une unité à jet d'encre.

**3.** Tête d'impression numérique selon l'une quelconque des revendications 1 - 2, dans laquelle l'unité de mesure de couleur (106) est un capteur spectral pour la mesure de la localisation chromatique à pleine vitesse d'impression.

**4.** Tête d'impression numérique selon l'une quelconque des revendications 1 - 3, dans laquelle l'unité de régulation (108) est conçue pour corriger les informations de commande transmises par le dispositif de commande (104).

**5.** Tête d'impression numérique selon l'une quelconque des revendications 1 - 4, dans laquelle l'unité de régulation (108) est conçue pour corriger les points de trame de consigne dans la mémoire d'image numérique (105).

**6.** Tête d'impression numérique selon l'une quelconque des revendications 1- 5, dans laquelle l'unité de régulation (108) est conçue pour corriger les informations de couleur de consigne dans la mémoire d'image numérique (105).

**7.** Procédé de commande d'une tête d'impression numérique d'une machine d'impression numérique pour imprimer une image d'impression sur une bande de matériau,

dans lequel de l'encre d'impression est transmise sur la bande de matériau sous forme de points de trame réels avec une unité de transfert d'encre (101),
dans lequel l'image d'impression est enregistrée dans une mémoire d'image numérique (105) sous forme de points de trame de consigne numériques et d'informations de couleur de consigne numériques,
dans lequel des informations de commande sont calculées et transmises à l'unité de transfert d'encre (101) avec un dispositif de commande (104) en fonction des points de trame de consigne à partir de la mémoire d'image numérique (105),
dans lequel une unité de mesure de couleur (106) mesure une information de couleur réelle à partir de l'image d'impression,
dans lequel l'information de couleur réelle est comparée avec une unité de comparaison (107) à l'information de couleur de consigne correspondante pour calculer une information de couleur delta ($\Delta E$) et
dans lequel les informations de commande sont corrigées avec une unité de régulation (108) en fonction de l'information de couleur delta ($\Delta E$) de sorte à réduire l'écart entre l'information de couleur réelle et l'information de couleur de consigne, dans lequel

la correction des informations de commande est effectuée dans une boucle de régulation dans le dispositif de commande (104), dans les données de trame par manipulation d'image ou dans des données à ton continu préséparées par des courbes de gradation.

**8.** Procédé selon la revendication 7, dans lequel l'unité de transfert d'encre (101) est une unité à jet d'encre.

**9.** Procédé selon l'une quelconque des revendications 7-8, dans lequel l'unité de mesure de couleur (106) est un capteur spectral pour la mesure de la localisation chromatique à pleine vitesse d'impression.

**10.** Procédé selon l'une quelconque des revendications 7-9, dans lequel l'unité de régulation (108) est conçue pour corriger les informations de commande transmises par le dispositif de commande.

**11.** Procédé selon l'une quelconque des revendications 7-10, dans lequel l'unité de régulation (108) est conçue pour corriger les points de trame de consigne dans la mémoire d'image numérique (105).

**12.** Procédé selon l'une quelconque des revendications 7-11, dans lequel l'unité de régulation (108) est conçue pour corriger les informations de couleur de consigne dans la mémoire d'image numérique (105).

Fig. 1

**EP 3 918 780 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1215887 A2